**Europäisches Patentamt**

**European Patent Office**

**Office européen des brevets**

(19)

(11) Numéro de publication: **0 120 760**
**A1**

(12)

# DEMANDE DE BREVET EUROPEEN

(21) Numéro de dépôt: **84400495.2**

(22) Date de dépôt: **12.03.84**

(51) Int. Cl.³: **B 62 D 25/16**

(30) Priorité: **15.03.83 FR 8304239**

(43) Date de publication de la demande:
**03.10.84 Bulletin 84/40**

(84) Etats contractants désignés:
**AT BE CH DE GB IT LI LU NL SE**

(71) Demandeur: **COREL-INVEST Société Anyome**
**95 rue de la Louvière**
**F-78120 Rambouillet(FR)**

(72) Inventeur: **Le Corre, Pierre**
**95, rue de la Louvière**
**F-78120 Rambouillet(FR)**

(72) Inventeur: **Le Corre, Béatrice**
**95, rue de la Louvière**
**F-78120 Rambouillet(FR)**

(74) Mandataire: **Rodhain, Claude**
**Cabinet Claude RODHAIN 30, rue La Boétie**
**F-75008 Paris(FR)**

(54) **Dispositif destiné à empêcher la projection latérale d'eau par les roues de véhicules automobiles.**

(57) L'invention concerne un dispositif destiné à empêcher la projection latérale d'eau par les roues de véhicules automobiles.

Le problème technique posé consiste à supprimer toute projection d'eau sur les côtés du véhicule en cas de pluie.

Suivant l'invention, le problème est résolu grâce au fait que ce dispositif se compose d'au moins une bavette latérale (14,15) fixée sur le bord longitudinal du châssis (4) ou de la carrosserie (15), parallèlement à la direction d'avancement du véhicule, et d'une paroi déflectrice (16), à laquelle est liée la bavette (14) et qui est disposée dans un plan sensiblement perpendiculairement à ladite direction d'avancement du véhicule.

L'invention est utilisable principalement pour les camions et autocars.

FIG.1

EP 0 120 760 A1

" <u>Dispositif destiné à empêcher la projection latérale d'eau par</u>
<u>les roues de véhicules automobiles</u> ".

La présente invention concerne un dispositif destiné à empêcher la projection latérale d'eau par les roues
de véhicules automobiles, notamment au niveau des passages de
roues des fourgonnettes, autocars, camions, semi-remorque et analogues.

Dans le domaine de la conduite sur route
et autoroute, tous les automobilistes sont souvent confrontés à
ce problème important qu'est, en cas de pluie, la projection
d'eau à l'arrière et sur le côté des véhicules en circulation
qui les précèdent sur la route.

En effet, ces projections d'eau se traduisent immanquablement par la formation de véritables jets d'eau
de brouillards de gouttelettes d'eau plus ou moins denses ou de
gerbes d'eau notamment lors du passage d'un véhicule dans des
flaques d'eau.

Ces phénomènes gènent considérablement la
conduite des véhicules automobiles, en particulier lors du dépassement, car ce brouillard entraîne une absence quasi-totale de
visibilité ce qui est la cause de nombreux accidents. En outre,
ces gerbes d'eau latérales sur le côté gauche de ce véhicule, et
en dépassement engendrent des risques d'aquaplaning par suite
de l'accumulation de l'eau sous les roues du véhicule en train de
doubler surtout lorsque celui qu'il dépasse est un camion, un
autocar ou autres véhicules de fort tonnage.

Sur certaines voitures de tourisme et sur
certains poids lourds, il est connu de monter, outre les ailes
et garde-boue classiques différents  systèmes ou organes destinésà réduire la projection de l'eau de pluie vers l'arrière du
véhicule, c'est-à-dire en direction du véhicule suiveur. Il s'agit le plus souvent de volets ou bavettes fixes ou mobiles, rigides ou souples, par exemple en caoutchouc.

Toutefois, ces dispositifs ne s'opposent
qu'à une projection d'eau vers l'arrière et présentent l'inconvénient majeur d'évacuer l'eau sur le côté des roues ce qui ne

fait qu'accroître les projections d'eau latérales et donc augmente les risques de collision par les autres véhicules, en cas de dépassement.

Le but de la présente invention est de résoudre ce problème en supprimant les inconvénients qui y sont liés à savoir un manque de visibilité, risque d'aquaplaning et causes de collisions frontales.

Ce problème est résolu à l'aide d'un dispositif destiné à empêcher la projection latérale d'eau de pluie ou autre par les roues de véhicules automobiles, grâce au fait qu'il se compose d'au moins une bavette latérale fixée sur le bord longitudinal du châssis ou de la carrosserie, parallèlement à la direction d'avancement du véhicule, et d'une paroi déflectrice, à laquelle est liée la bavette, et qui est disposée dans un plan sensiblement perpendiculairement à ladite direction d'avancement du véhicule.

Selon une variante de réalisation, la bavette est constituée par une plaque plane rigide reliée par des moyens de fixation à la paroi latérale du véhicule.

Selon une autre variante, la bavette est constituée par une plaque latérale souple fixée à une armature métallique rigide reliée par des moyens de fixation à la paroi latérale du véhicule.

En outre, selon une autre caractéristique essentielle avantageuse de l'invention, la paroi déflectrice se compose d'un élément de paroi frontale perpendiculaire à la direction d'avancement du véhicule, et d'un élément de paroi incurvé formant gouttière, dont l'extrémité ouverte libre est orientée vers l'espace situé entre les roues de l'essieu, c'est-à-dire vers le plan médian longitudinal du véhicule, et dirigée vers le sol.

On comprend donc que, selon l'invention, d'une part la bavette empêche la projection latérale de l'eau, mais que d'autre part, l'eau entraînée par les roues se trouve projetée sur la paroi déflectrice verticale perpendiculaire à la direction de déplacement du véhicule, qui l'arrête et dont la gouttière inférieure la collecte pour la rejeter en la guidant en direction de l'espace médian entre les roues du véhicule.

D'autres caractéristiques et avantages ressortiront de la description qui va suivre de formes de réalisation de l'invention, prise en référence aux dessins annexés, sur lesquels :

- la Fig. 1 est une vue en élévation latérale d'un camion auquel la présente invention est applicable ;

- la Fig. 2 est une vue de derrière du camion de la fig 1, montrant le montage du dispositif conforme à l'invention ; et

- les Fig. 3 et 4 montrent des vues en perspective à plus grande échelle de deux variantes préférées de réalisation du dispositif selon l'invention.

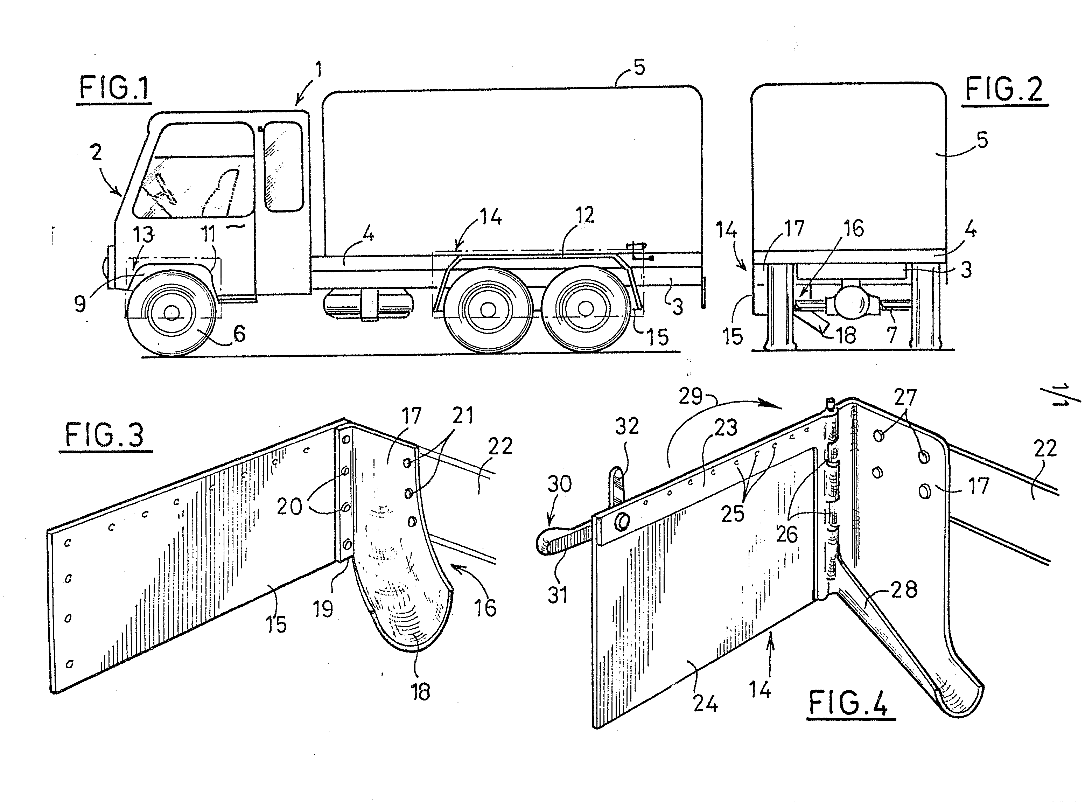

Sur les fig. 1 et 2, montrant des vues schématiques d'un camion désigné dans son ensemble par la référence 1, on a représenté la cabine 2 reliée à et supportée par des longerons 3 supportant, à la partie arrière, un plateau ou une plate-forme 4 portant une carrosserie supérieure 5, ici de type fermé, mais qui pourrait tout aussi bien être constituée sous la forme d'une structure ouverte vers le haut avec des panneaux latéraux, etc...

Le camion est représenté ici avec un essieu avant équipé de roues 6 et de deux essieux arrière 7 équipés de roues 8, mais pourrait tout aussi bien n'avoir qu'un essieu arrière.

Comme cela est visible, le camion comporte au niveau du passage de roue avant 9 et du passage de roue arrière 10 des garde-boues désignés respectivement par les références 11 et 12 ainsi que les dispositifs respectifs conformes à l'invention 13, 14 représentés par des traits mixtes. Ces dispositifs, que l'on va décrire en détail en référence aux figures 3 et 4, forment des caches latéraux rectangulaires verticaux sur le côté des roues associées 6,8 (partie gauche du camion), le bord inférieur desdits dispositifs 13, 14 étant situé au-dessous du niveau des essieux respectifs.

Par ailleurs, comme le montre schématiquement la fig. 2, chaque dispositif 13, 14 se compose d'une bavette latérale 15 formant le cache latéral proprement dit et d'une paroi déflectrice verticale 16 à laquelle est réunie la bavette 15 dont la partie supérieure est constituée par un élément de paroi plat 17 perpendiculaire à la direction d'avancement du véhicule, et par une partie inférieure en forme de gouttière 18 s'inclinant vers le bas et vers l'espace médian entre les roues du véhicule.

Ci-après, on va décrire de façon détaillée deux types de réalisation préférés de l'invention.

Sur la Fig. 3, on a représenté une vue en perspective d'une forme de réalisation dans laquelle la bavette 15 est formée d'une plaque rectangulaire rigide, en métal ou en matière plastique rigide, recouvrant la zone délimitée par le trait mixte sur la figure 1 et fixée de façon amovible au côté de la carrosserie 5 et sur un rebord latéral vertical 19 de la paroi déflectrice 16 par des boulons, vis ou analogues tels que désignés par la référence 20.

La paroi déflectrice 16 ici réalisée d'un seul tenant soit par une tôle rigide, soit par une paroi en matière plastique, soit par un élément de caoutchouc ( par exemple pneu rechappé) se compose de la partie supérieure plane 17 fixée par des boulons 21 à une traverse 22 du châssis du camion et dont la partie inférieure est en forme de gouttière 18 dont la concavité est tournée vers le haut et dont l'extrémité ouverte est dirigée vers le bas et vers la zone médiane située entre les roues du camion.

Sur la figure 4, on a représenté une vue en perspective analogue à celle de la Fig. 3, d'une autre forme de réalisation dans laquelle la bavette 15 se compose d'une armature rigide en équerre 23, dans l'angle inférieur de laquelle une plaque souple ou rigide 24 en caoutchouc ou en matière plastique est fixée par des boulons tels 25, et qui est reliée par des articulations du type charnières 26 à la paroi déflectrice 16. Cette dernière est réalisée d'un seul tenant soit part une tôle, soit par une plaque de matière plastique rigide 17 fixée par des boulons 27 à la traverse 22 du camion.

L'extrémité inférieure en forme de gouttière 18 est formée par exemple par rabattement du bord inférieur 28 vers le haut vers la plaque 17 avec aplatissement contre cette plaque au niveau du bord latéral extérieur et rabat à distance (pour former la gouttière) au niveau du bord latéral tournée vers l'espace situé entre les roues du camion. La gouttière 18 est réalisée de manière à être oblique, comme dans le cas de la figure 3.

En outre dans cette forme de réalisation, la bavette 15 articulée sur les charnières 26 sur la plaque 17 de la paroi déflectrice peut pivoter autour des charnières selon la flèche 29 et comporte à sa partie supérieure un verrou 30 formé d'un levier 31 solidaire, à angle droit, d'un taquet 32 monté pivotant et pouvant être engagé dans un bloc de fixation 33 représenté très schématiquement sur la figure 1, et solidaire de la paroi du véhicule afin de bloquer en position la bavette 15.

Naturellement selon une autre variante non représentée de réalisation, la plaque 17 et la gouttière 18 peuvent être formées par des éléments distincts rigides et/ou souples, reliés entre eux de façon adéquate.

Par ailleurs, selon une autre variante de réalisation non représentée, la bavette latérale 15 peut être simplement réalisée entièrement par une plaque très souple, en caoutchouc ou matière plastique, accrochée par tout moyen approprié sur le pourtour d'une découpe de la carrosserie d'une forme correspondant au trait mixte sur la figure 1, ou sur le côté de la carrosserie ou à des traverses du châssis du camion, moyennant éventuellement la mise en place de montants latéraux verticaux de fixation.

Le fonctionnement du dispositif selon l'invention est le suivant :

Lorsque le camion roule sur route en cas de pluie, l'eau projetée latéralement par les roues est bloquée par la bavette 15 et cette eau, ainsi que l'eau entraînée par la rotation des roues 6,8 vient heurter la plaque supérieure 17 de la paroi déflectrice 16 et s'y accumule et, sous l'action de la pesanteur, tombe le long de cette plaque en descendant dans la gouttière 18 et s'évacue vers le bas et le milieu de l'espace situé entre les roues 8.

# REVENDICATIONS

1°) - Dispositif destiné à empêcher la projection latérale d'eau par les roues (6,8) de véhicules automobiles (1), notamment au niveau des passages de roues (9, 10) de fourgonnettes, camions, semi-remorques et analogues, caractérisé en ce qu'il se compose d'au moins une bavette latérale (14, 15) fixée sur le bord longitudinal du châssis (4) ou de la carrosserie (5), parallèlement à la direction d'avancement du véhicule et d'une paroi déflectrice (16), à laquelle est liée la bavette (14) et qui est disposée dans un plan sensiblement perpendiculairement à ladite direction d'avancement du véhicule.

2°) - Dispositif selon la revendication 1, caractérisé en ce que la bavette (14) est constituée par une plaque plane rigide (15) reliée par des moyens de fixation (20; 26,30) à la paroi latérale du véhicule (1).

3°) - Dispositif selon la revendication 1, caractérisé en ce que la bavette (14) est constituée par une plaque latérale souple (24) fixée à une armature métallique rigide (23) reliée par des moyens de fixation (26, 30) à la paroi latérale du véhicule.

4°) - Dispositif selon la revendication 2, caractérisée en ce que les moyens de fixation (26,30) sont constitués d'une part par des articulations (26) reliant l'armature à un rebord de la paroi déflectrice (16,17), et d'autre part par un verrou de blocage (30) monté pivotant sur l'autre extrémité de l'armature (23) et verrouillable dans un bloc de fixation (33) solidaire de la paroi latérale du véhicule (1).

5°) - Dispositif selon la revendication 1, caractérisé en ce que la bavette (14) est constituée par une plaque souple fixée de façon amovible sur une découpe de la paroi latérale de la carrosserie, et est repliable latéralement et/ ou vers le haut.

6°) - Dispositif selon l'une quelconque des revendications 4 et 5, caractérisé en ce que la bavette (14) est en caoutchouc.

7°) - Dispositif selon l'une quelconque des revendications 4 et 5, caractérisé en ce que la bavette (14) est en matière plastique souple.

8°) - Dispositif selon l'une quelconque des revendications 1 à 7, caractérisé en ce que la paroi déflectrice (16) se compose d'un élément de paroi frontale (17) perpendiculaire à la direction d'avancement du véhicule et d'un élément de paroi incurvé formant gouttière (18), dont l'extrémité ouverte libre est orientée vers l'espace situé entre les roues (8) de l'essieu (c'est-à-dire vers le plan médian longitudinal du véhicule) et dirigée vers le sol.

9°) - Disposisitf selon la revendication 8, caractérisé en ce que l'élément de paroi frontale (17) et la gouttière (18) sont réalisés d'un seul tenant.

10°) - Dispositif selon l'une quelconque des revendications 8 ou 9, caractérisé en ce que la paroi déflectrice (16) est rigide et est constituée par exemple en une tôle métallique ou en matière plastique dure, et est fixée par boulonnage (27) à une traverse (22) du véhicule (1).

11°) - Dispositif selon l'une quelconque des revendications 8 ou 9, caractérisé en ce que la paroi déflectrice (16) est souple et est constituée par exemple par des pneus rechapés et est fixée rigidement par boulonnage (21) à la traverse (22) du véhicule et à la bavette latérale rigide (14).

12°) - Dispositif selon l'une quelconque des revendications 1 à 11, caractérisé en ce que la gouttière (18) est formée par un pliage partiel vers le haut de la partie inférieure de la paroi déflectrice (16) et se prolonge latéralement et obliquement vers l'espace central situé au-dessous du véhicule entre les roues.

13°) - Dispositif selon l'une quelconque des revendications 1 à 12, caractérisé en ce que la bavette (15) recouvre latéralement une ou plusieurs roues (6; 8) du véhicule jusqu'à un niveau situé au-dessous des essieux (7).

FIG.1

FIG.2

FIG.3

FIG.4

0120760

1/1

**0120760**
Numéro de la demande

Office européen
des brevets

**RAPPORT DE RECHERCHE EUROPEENNE**

EP 84 40 0495

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | GB-A-1 526 212 (NEVILLE) <br><br> * En entier * | 1,2,8, 10,13 | B 62 D 25/16 |
| A | US-A-2 605 119 (EARNEST) <br><br> * Figure 3 * | 1,2,4, 8,10, 13 | |
| A | US-A-3 866 943 (INNIS) <br> * Figures 5,6 * | 1,2,4 | |
| E | EP-A-0 074 844 (NETLON) <br> * Revendications 8,9 * | 1,8 | |
| A | GB-A-2 004 823 (GOODALL) | | **DOMAINES TECHNIQUES RECHERCHES (Int. Cl. 3)** |
| A | GB-A-2 014 525 (BEGG) | | B 62 D 25/00 |
| A | US-A-3 834 732 (SCHONS) | | |
| A | GB-A-2 050 272 (GOODALL) <br><br> ---     -/- | | |

| Le présent rapport de recherche a été établi pour toutes les revendications | | |
|---|---|---|
| Lieu de la recherche <br> LA HAYE | Date d'achèvement de la recherche <br> 07-05-1984 | Examinateur <br> SCHMITTER J.M. |

# 0120760

**Office européen des brevets**

## RAPPORT DE RECHERCHE EUROPEENNE

Numéro de la demande

EP 84 40 0495

| | DOCUMENTS CONSIDERES COMME PERTINENTS | | Page 2 |

| Catégorie | Citation du document avec indication, en cas de besoin, des parties pertinentes | Revendication concernée | CLASSEMENT DE LA DEMANDE (Int. Cl. ³) |
|---|---|---|---|
| E | GB-A-2 114 075 (BUCKLEY)<br>* Revendication 1; figures 5,6,8 *<br>----- | 1,8 | |
| | | | **DOMAINES TECHNIQUES RECHERCHES (Int. Cl. ³)** |

Le présent rapport de recherche a été établi pour toutes les revendications

| Lieu de la recherche<br>LA HAYE | Date d'achèvement de la recherche<br>07-05-1984 | Examinateur<br>SCHMITTER J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82